# EUROPÄISCHE PATENTSCHRIFT

(11) **EP 0 801 028 B1**
(45) Veröffentlichungstag und Bekanntmachung des Hinweises auf die Patenterteilung: **10.11.1999**
(21) Anmeldenummer: 97105668.4
(22) Anmeldetag: 05.04.1997
(51) Int. Cl.: C01D 9/00, C01D 3/08

(54) **Verfahren zur selektiven Wiedergewinnung der Salzbestandteile aus nitrit-nitrathaltigen Härtereialtsalzen**
Method for selective recovery of salt components from nitrite/nitrate-containing, used hardening salts
Procédé de récupération sélective des constituants salins de sels de durcissement usés, contenant des nitrites et des nitrates

(30) Priorität: 13.04.1996 DE 19614645
(43) Veröffentlichungstag der Anmeldung: 15.10.1997
(73) Patentinhaber: Houghton Durferrit GmbH, 68169 Mannheim (DE)
(72) Erfinder: Kremer, Matthias, Dr., 65185 Wiesbaden (DE); Wahl, Georg, 63517 Rodenbach (DE); Wigger, Stefan, 63457 Hanau (DE); Gock, Eberhard, Prof. Dr., 38640 Goslar (DE); Kähler, Jörg, Dr., 38678 Clausthal-Zellerfeld (DE)
(74) Vertreter: Hirsch, Hans-Ludwig, Dr.

(56) Entgegenhaltungen:
- DE-A- 2 400 318
- DE-A- 2 400 319
- WIGGER S ET AL: "RECYCLING CHLORIDISCHER HAERTEREIALTSALZE RECOVERY OF WASTE SALTS FROM HEAT TREATING FACILITIES" ERZMETALL, Bd. 49, Nr. 7/08, Juli 1996, Seiten 455-462, XP000615749

## Beschreibung

Die Erfindung betrifft ein Verfahren zur selektiven Wiedergewinnung der Salzbestandteile aus nitrit-nitrat-hydroxidhaltigen Altsalzen, die bei der Wärmebehandlung von Stahlteilen in Salzbädern anfallen, durch Auflösen der Altsalze in Wasser, Abtrennung des unlöslichen Rückstands und fraktionierte Auskristallisation der Alkalinitrate.

Um die Härte bzw. Verschleißfestigkeit von Stahl zu erhöhen, werden seit langem Wärmebehandlungsverfahren eingesetzt. Dabei nimmt die Salzbadtechnologie, bei der die Werkstücke in Salzschmelzen behandelt werden, in der Verschleißschutztechnik eine bedeutende Stellung ein. Für die Abkühlung von Bauteilen, insbesondere nach der Behandlung in Kohlungsbädern, werden nitrit-nitrat-hydroxidhaltige Salzbäder verwendet. Die Hauptkomponenten dieser Salzbäder sind Nitrite, Nitrate und Hydroxide der Alkalimetalle Natrium und Kalium. Außerdem enthalten sie normalerweise noch kleinere Mengen an Barium und Chloriden und größere Mengen an Karbonaten. In diesen Salzschmelzen werden die an den Stahlteilen anhaftende Cyanidsalze oxidiert und die Korrosionsbeständigkeit der Stähle bedeutend gesteigert. Durch die besonders günstige Abkühlgeschwindigkeit in diesen Bädern wird eine besonders hohe Festigkeit und hohe Härte erzielt. Da die Salzschmelzen durch Abplatzen von Zunderpartikeln aus der Werkstückoberfläche verunreinigt und infolge der chemischen Reaktionen die aktiven Salzbadbestandteile verbraucht werden, müssen die Bäder in regelmäßigen Abständen entschlammt und mit Frischsalz aufgefüllt werden. Dieser Schlamm besteht noch zu 50 bis 99 Prozent aus Salzbestandteilen und muß als Altsalz in Untertagedeponien entsorgt werden.

Bisher gelten diese Altsalze als nicht wirtschaftlich rückgewinnbar, so daß sich die Bemühungen zur Entschärfung des Altsalzproblems in erster Linie auf eine Verbesserung der Deponierbarkeit und eine Teilentgiftung konzentrieren.

Lösungansätze zur teilweisen Wiedergewinnung von Salzbestandteilen aus Härtereialtsalzen werden beispielsweise in der Zeitschrift CAV 45 (1973), Seite 69-75 und in der Chemie-Ing.-Technik 45 (1973), Seite 1285-1289 beschrieben. Diese Verahren sehen eine gleichzeitige Behandlung von nitrathaltigen und cyanidhaltigen Altsalzen vor. Dabei soll in der Salzschmelze Cyanid durch Reaktion mit Nitriten und Nitraten entgiftet und der Abbau von überschüssigem Nitrit und Nitrat durch Zugabe von Magerkohle erreicht werden. In einem anschließenden Lösungsprozeß kann dann Bariumkarbonat von den anderen, löslichen Salzen abgetrennt werden. Der entscheidende Nachteil dieser Verfahren besteht darin, daß bei der Cyanidentgiftung in der Salzschmelze die Gefahr einer explosionsartigen Reaktion hervorgerufen wird, insbesondere dann, wenn der Cyanidgehalt, wie bei einigen Badtypen, über die 5 Prozentschwelle steigt. Eine Steuerung des Reaktionsablaufs ist ohne großen analytischen Aufwand daher nur schwer möglich. Darüber hinaus fallen bei dieser Reaktion giftige Abgase (NOₓ und CO) an, die z.B. katalytisch verbrannt werden müssen. Bei dem weiteren Prozeßschritt, der Fällung des Bariumkarbonates, entstehen Abwasser mit hoher Salzfracht, für die keine Angaben zu einer Wiedergewinnung gemacht werden.

Die teilweise Wiedergewinnung von Salzbestandteilen aus Härtereialtsalzen werden in den DE-OS 24 00 318 und DE-OS 24 00 319 geoffenbart. Nach der Cyanidentgiftung, die in der Schmelze bei 450 bis 550°C durchgeführt wird, wird das Altsalz mit heißem Wasser gelaugt. Der zu einem Großteil aus Bariumkarbonat bestehende Rückstand wird abgetrennt und einer weiteren Aufbereitung, z.B. zu Bariumchlorid, zugeführt. Das gelöste Karbonat wird durch Zugabe von Salpetersäure zu Kohlendioxid umgewandelt und die Chloridmenge durch Verdampfen des Wassers bis auf 10 bis 15 Gew.% vermindert, wobei Natriumchlorid als Kristallisat gewonnen werden kann. Die restliche Lösung wird bei 160°C getrocknet und das Salzgemisch aus Nitrat und Nitrit sowie zwei Prozent Natrium- und Kaliumchlorid soll direkt wieder in Härtereien verwendet werden können. Auch dieses Verfahren hat jedoch Nachteile, die eine großtechnische Umsetzung verhindert haben. So werden bei der Zugabe der Salpetersäure NOₓ-Gase in größeren Mengen frei, die katalytisch verbrannt werden müssen. Eine Umgehung der Säurezugabe durch Einbringen von Bariumnitrat in die Lösung erfordert aber wiederum eine zusätzlichen Verfahrensschritt. Insbesondere entsprechen die Reinheiten der erhaltenen Salze nicht den Anforderungen an die Rohstoffe zur Härtesalzherstellung und sind stark von der Zusammensetzung der eingesetzten Altsalze abhängig, die starken Schwankungen unterworfen ist. Auch das gewonnene Nitrat-Nitrit-Salz ist aufgrund der schwankenden Zusammensetzung nicht direkt wieder einsetzbar, zumal die verbliebene Chloridkonzentration nicht den technischen Anforderungen entspricht. Durch den Einsatz von Regeneratoren hat sich zudem in den vergangenen Jahren die Zusammensetzung der anfallenden Altsalze hin zu geringeren Cyanid- und Karbonatgehalten und größeren Chloridanteilen verändert. Diesen veränderten Rahmenbedingungen kann das beschriebene Verfahren ohne zusätzliche Verfahrensschritte nicht gerecht werden.

Verfahren zur Trennung von Alkalichloriden sind an sich bekannt, doch sind diese Verfahren nicht direkt auf die Rückgewinnung von Alkalinitraten aus Härtereialtsalzen übertragbar, da hier mit unterschiedlichen Zusammensetzungen der Ausgangsprodukte gerechnet werden muß und andere Verfahrensbedingungen beachtet werden müssen.

Es war daher Aufgabe der vorliegenden Erfindung, ein Verfahren zur selektiven Wiedergewinnung der Salzbestandteile aus nitrit-nitrat-hydroxidhaltigen Altsalzen, die bei der Wärmebehandlung von Stahlteilen in Salzbädern anfallen zu finden, durch Auflösen der Altsalze in Wasser, Abtrennung des unlöslichen Rückstands und fraktionierte Auskristallisation der Alkalinitrate, das einfach durchzuführen ist und hohe Ausbeuten an direkt wiederverwertbaren Salzen liefert.

Diese Aufgabe wird erfindungsgemäß dadurch gelöst, daß die festen Altsalze auf eine Korngröße von 1 bis 50 mm zerkleinert in einer salpetersauren, wasserstoffperoxidhaltigen Lösung bei 40 bis 90°C aufgelöst werden, nach Abfiltrieren des unlöslichen Rückstandes durch Abkühlen der konzentrierten, neutralisierten Salzlösung auf -10 bis +20°C Kaliumnitrat ausgefällt, durch weiteres Aufkonzentrieren der Lösung bei 60 bis 120°C Natriumchlorid auskristallisiert und aus der Restlösung durch Zugabe von konzentrierter Salpetersäure Natriumnitrat auskristallisiert wird.

Vorteilhafterweise wird nach dem Lösen der Altsalze durch Zugabe von Karbonat und Alkali in leicht alkalischem Medium eventuell vorhandenes Barium als Bariumkarbonat ausgefällt und abgetrennt.

Vorzugsweise werden die Altsalze auf eine Korngröße von 5 bis 10 mm zerkleinert.

Es wurde gefunden, das nach einer Zerkleinerung der festen nitrit-nitrat-hydroxidhaltigen Härtereialtsalze auf eine Korngröße von 1 mm bis 50 mm, vorteilhaft 5 mm bis 10 mm, durch eine Laugung in einer salpetersauren, wasserstoffperoxidhaltigen Vorlage, die Salzbestandteile vollständig gelöst werden. Dabei werden gleichzeitig die Nitritionen zu Nitrat oxidiert sowie Karbonat und Hydroxid unter Bildung von Nitratsalzen neutralisiert. Durch das Vorhandensein von Wasserstoffperoxid in der Vorlage wird entgegen der Erwartung beim Einbringen des Nitritsalzes in grobkörniger Form beim Kontakt mit der salpetersauren Vorlage kein NOₓ-Gas freigesetzt. Dies ist durch die relativ geringe Reaktionsoberfläche und das sofortige Weiterreagieren entstehender NOₓ-Gase in der Lösung mit dem Wasserstoffperoxid zu erklären. Durch diese Kombination von Reagenzien in der Lösung wird weiterhin sichergestellt, daß eventuell falsch gekennzeichnetes cyanidhaltiges Salz durch Reaktion mit dem Nitrit und dem Wasserstoffperoxid problemlos entgiftet wird. Die Prozeßsteuerung kann durch Kontrolle des pH-Wertes und Messung des Redoxpotentials erfolgen. Ein weiterer Vorteil ist die bei der Oxidation und Neutralisation freiwerdende Reaktionswärme, die den endothermen Lösungsvorgang ausgleicht. Dadurch stellt sich eine Lösungstemperatur von 50°C bis 80°C ein, die das Erreichen einer sehr hohen Salzkonzentration ermöglicht. So kann in einer Vorlage aus 50 kg 65%iger Salpetersäure und 50 kg 50%iger Wasserstoffperoxidlösung zwischen 100 kg bis 200 kg nitrathaltiges Altsalz gelöst werden.

Durch Zugabe von Kaliumkarbonat wird eventuell vorhandenes Barium als Bariumkarbonat gefällt und kann so zusammen mit den anderen unlöslichen Verunreinigungen durch Filtration abgetrennt werden.

Aus der Salzlösung können nun die einzelnen Salzarten durch selektive Kristallisation gewonnen werden. Dabei wird durch die gezielte Kristallisation in der Reihenfolge Kaliumnitrat, Natriumchlorid und abschließend Natriumnitrat erreicht, daß die Salze praktisch vollständig in hoher Reinheit wiedergewonnen werden. Die Prozeßparameter lassen sich dabei durch ionenselektive Elektroden überwachen.

Das Kaliumnitrat kann durch Abkühlen der Lösung auf eine Temperatur zwischen -10°C und +20°C in reiner Form auskristallisiert werden, da die Löslichkeit der Natriumsalze wesentlich weniger stark von der Temperatur beeinflußt wird und sie in Lösung bleiben. Aus einer Lösung mit beispielsweise 30 Gew.% Kaliumnitrat, 30 Gew.% Natriumnitrat und 5 Gew.% Natriumchlorid kann durch Abkühlung der Lösung auf 0°C 66 Prozent des gelösten Kaliumnitrates auskristallisiert werden. Durch einfaches Waschen mit Kaliumnitratlösung werden die Kristalle von anhaftender Lösung befreit. So erhält man bei Wahl der für die Lösungszusammensetzung optimalen Kristallisationstemperatur ein Kaliumnitrat mit einer Reinheit von über 96 Prozent.

Im nächsten Schritt wird bei Konzentrieren der Lösung, vorzugsweise in einem Vakuumkristallisator, bei Temperaturen zwischen 60°C und 120°C das mit der Salpetersäure und der Wasserstoffperoxidlösung zugeführte Wasser verdampft und das Natriumchlorid bis auf eine Konzentration von etwa 3 Gew.% auskristallisiert.

Durch Zugabe von konzentrierter Salpetersäure wird im letzten Schritt das Natriumnitrat abgetrennt. Da sich dabei überraschenderweise die beiden Nitratsalze unterschiedlich verhalten, gelingt es so, das Natriumnitrat mit einer sehr hohen Reinheit von über 98 % zu gewinnen, durch Waschen läßt sich die Reinheit sogar auf weit über 99 Prozent steigern. Um die Konzentration des Natriumnitrates in der Lösung auf 5 bis 15 Gew.% zu senken, wird eine Salpetersäurekonzentration zwischen 10 und 30 Gew.% benötigt, wobei die höheren Konzentrationen an Salpetersäure auch eine stärkere Absenkung der Natriumnitratkonzentration bewirken. Durch Erhitzen des Salzes mit der anhaftenden Salpetersäure kann der noch geringe Chloridanteil im Salz vollständig zu gasförmigem Chlorwasserstoff umgesetzt werden, so daß ein Produkt erhalten wird, das nach dem Neutralisieren in einer leicht hydroxidhaltigen Natriumnitratlösung den höchsten Reinheitsanforderungen genügt.

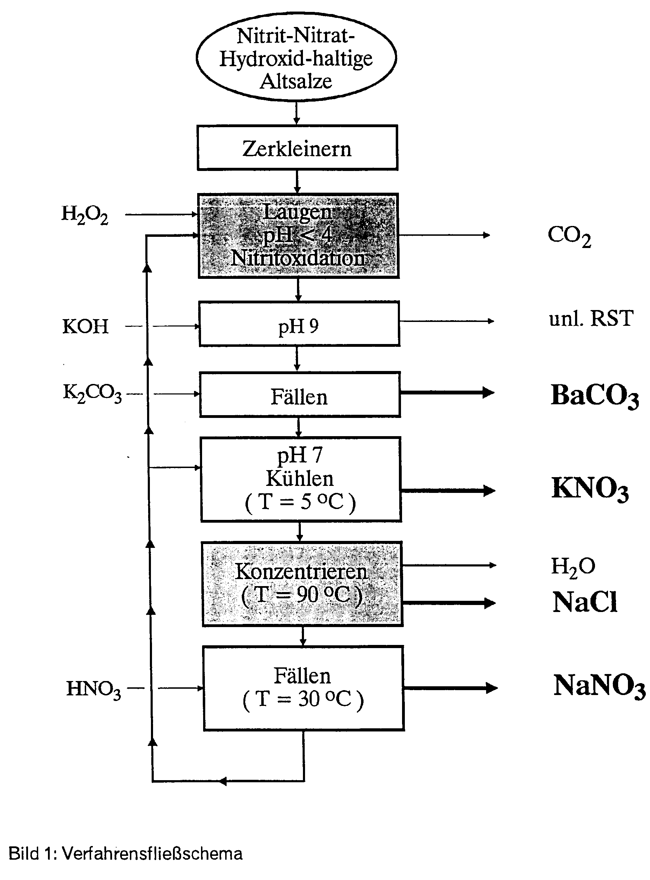

Die Abbildung zeigt ein Fließschema des erfindungsgemäßen Verfahrens, in dem der Ablauf der beschriebenen Schritte dargestellt ist. Nach der Zerkleinerung der Altsalze erfolgt die Laugung in einer salpetersauren und wasserstoffperoxidhaltigen Vorlage. Bariumkarbonat und andere unlösliche Feststoffe werden abgetrennt. Aus der Lösung werden die einzelnen Salze in der Reihenfolge Kaliumnitrat, Natriumchlorid, Natriumnitrat durch selektive Kristallisation abgetrennt. Die verbleibende salpetersaure Lösung wird zur Laugung weiterer Altsalze zurückgeführt.

Folgende Beispiele sollen das erfindungsgemäße Verfahren näher erläutern:
1. Es wurden 100 kg eines nitrathaltigen Altsalzgemisches auf eine Korngröße von 10 mm zerkleinert. In Teilmengen von je 10 kg wurde das Altsalz aufbereitet. Dazu wurde das Altsalz bei 55°C in einer Vorlage gelaugt, die 2,7 kg 65%iger Salpetersäure sowie 4 kg 50%iger Wasserstoffperoxidlösung enthielt. Mit Hilfe von polymeren Flockungsmitteln wurden die unlöslichen Verunreinigungen aus der Lösung entfernt. Durch Zugabe von 0,1 kg Kaliumcarbonat und Einstellung des pH-Wertes durch Zugabe von Kaliumhydroxid auf 9 wurde das Barium als Carbonat gefällt. Die mit Salpetersäure auf pH 7 neutralisierte Lösung wurde danach auf -5°C abgekühlt und das auskristallisierte Kaliumnitrat abgetrennt. Durch Verdampfen von jweils 4,1 l Wasser wurde das Natriumchlorid bei einer Temperatur von 105°C auskristallisiert. Zu der konzentrierten Lösung wurde die oben genannte Menge Salpetersäure gegeben und das dadurch auskristallisierte Natriumnitrat bei 10°C abgetrennt sowie durch Erwärmen auf 100°C von anhaftendem Chlorid befreit. Die salpetersaure Lösung wurde mit der oben aufgeführten Menge Wasserstoffperoxid versetzt und zur Laugung der nächsten Charge zurückgeführt.

Die Massenbilanz der Aufbereitung ergab folgendes Ergebnis:

| **Verbindung** | **Anteil im Altsalz** | **Produktmenge** | **Produktreinheit** |
|---|---|---|---|
| KNO₃ | 24,5 % | 57,5 kg | 99,0 % |
| KNO₂ | 30,2 % | 0,0 kg | - |
| NaNO₃ | 20,6 % | 24,5 kg | 97,0 % |
| NaCl | 5,1 % | 5,0 kg | 98,7 % |
| BaCO₃ | 2,1 % | 2,6 kg | 97,7 % |
| Na₂CO₃ | 10,5 % | 0,0 kg | - |
| NaOH | 2,0 % | 0,0 kg | - |
| Fe₃O₄(Rückstand) | 4,8 % | 7,0 kg | 32 % Restfeuchte |

2. Es wurden 100 kg eines nitrathaltigen, nitritarmen Altsalzes auf eine Korngröße von 10 mm zerkleinert.In Teilmengen von je 10 kg wurde das Altsalz aufbereitet. Dazu wurde das Altsalz bei 65°C in einer Vorlage gelaugt, die 15,1 kg 65%iger Salpetersäure sowie 1,7 kg 50%ige Wasserstoffperoxidlösung enthielt. Mit Hilfe von polymeren Flockungsmitteln wurden die unlösichen Verunreinigungen entfernt. Durch Zugabe von 3 g Kaliumcarbonat und Kaliumhydroxid bis zum Erreichen eines pH-Werte von etwa 9 wurde das Barium als Carbonat aus der Lösung gefällt. Danach wurde die mit Salpetersäure auf pH 7 neutralisierte Lösung auf 10°C abgekühlt und das auskristallisierte Kaliumnitrat abgetrennt. Durch Verdampfen von 3,4 l Wasser wurde das Natriumchlorid bei einer Temperatur von 90°C auskristallisiert. Zu der konzentrierten Lösung wurde bei 30°C die oben genannte Menge Salpetersäure gegeben und das dadurch auskristallisierte Natriumnitrat nach dem Abfiltrieren durch Erwärmen auf 100°C von anhaftendem Chlorid befreit. Die salpetersaure Lösung wurde mit der oben aufgeführten Menge Wasserstoffperoxid versetzt und zur Laugung zurückgeführt.

Die Massenbilanz der Aufbereitung ergab folgendes Ergebnis:

| **Verbindung** | **Anteil im Altsalz** | **Produktmenge** | **Produktreinheit** |
|---|---|---|---|
| KNO₃ | 14,1 % | 82,8 kg | 99,0 % |
| KNO₂ | 1,1 % | 0,0 kg | - |
| NaNO₃ | 0 % | 75,7 kg | 99,5 % |
| NaCl | 0,2 % | 0,2 kg | 96,8 % |
| BaCO₃ | 0,1 % | 0,1 kg | 98,1 % |
| Na₂CO₃ | 40,6 % | 0,0 kg | - |
| NaOH | 4,9 % | 0,0 kg | - |
| KOH | 37,4 % | 0,0 kg | - |
| Fe₃O₄(Rückstand) | 1,3 % | 1,9 kg | 35 % Restfeuchte |

3. Es wurden 100 kg eines nitrathaltigen, kaliumreichen Altsalzes auf eine Korngröße von 10 mm zerkleinert. In Teilmengen von je 10 kg wurde das Altsalz aufbereitet. Dazu wurde das Altsalz bei 65°C in einer Vorlage gelaugt, die 2,8 kg 65%iger Salpetersäure sowie 5,2 kg 50%-ige Wasserstoffperoxidlösung enthielt. Mit Hilfe von polymeren Flockungsmitteln wurden die unlöslichen Verunreinigungen abgetrennt. Durch Zugabe von 0,08 kg Kaliumcarbonat und Kaliumhydroxid bis zum Erreichen eines pH-Werts von etwa 9 wurde das Barium als Carbonat gefällt und abgetrennt. Danach wurde die mit Salpetersäure auf pH 7 neutralisierte Lösung auf -10°C abgekühlt und das auskristallisierte Kaliumnitrat abgetrennt. Durch Verdampfen von 3,4 l Wasser wurde das Natriumchlorid bei einer Temperatur von 105°C auskristallisiert. Zu der konzentrierten Lösung wurde die oben genannte Menge Salpetersäure gegeben und bei einer Temperatur von 10°C das auskristallisierte Natriumnitrat abgetrennt. Durch Erwärmen auf 100°C wurde es anschließend von anhaftendem Chlorid befreit. Die salpetersaure Lösung wurde mit der oben aufgeführten Menge Wasserstoffperoxid versetzt und zur Laugung zurückgeführt.

Die Massenbilanz der Aufbereitung ergab folgendes Ergebnis:

| **Verbindung** | **Anteil im Altsalz** | **Produktmenge** | **Produktreinheit** |
|---|---|---|---|
| KNO₃ | 36,2 % | 77,9 kg | 99,2 % |
| KNO₂ | 35,1 % | 0,0 kg | - |
| NaNO₃ | 9,3 % | 33,6 kg | 99,1 % |
| NaCl | 3,7 % | 3,5 kg | 96,6 % |
| BaCO₃ | 1,5 % | 1,5 kg | 98,7 % |
| Na₂CO₃ | 10,1 % | 0,0 kg | - |
| NaOH | 3,8 % | 0,0 kg | - |
| Fe₃O₄(Rückstand) | 0,3 % | 0,4 kg | 33 % Restfeuchte |

4. Es wurden 100 kg eines nitrathaltigen, natriumreichen Altsalzes auf eine Korngröße von 10 mm zerkleinert. In Teilmengen von je 10 kg wurde das Altsalz aufbereitet. Dazu wurde das Altsalz bei 50°C in einer Vorlage gelaugt, die 6,8 kg 65%iger Salpetersäure sowie 0,05 kg 50%ige Wasserstoffperoxidlösung enthielt. Mit Hilfe von polymeren Flockungsmitteln wurden die unlöslichen Verunreinigungen aus der Lösung entfernt. Durch Zugabe von 0,03 kg Kaliumcarbonat und Kaliumhydroxid bis zum Erreichen eines pH-Werts von etwa 9 wurde das Barium als Carbonat gefällt. Die mit Salpetersäure auf pH 7 neutralisierte Lösung wurde danach auf 15°C abgekühlt und das auskristallisierte Kaliumnitrat abgetrennt. Durch Verdampfen von 2,4 l Wasser wurde das Natriumchlorid bei einer Temperatur von 100°C auskristallisiert. Zu der konzentrierten Lösung wurde die oben genannte Menge Salpetersäure gegeben und das dadurch auskristallisierte Natriumnitrat bei 5°C abgetrennt sowie durch Erwärmen auf 100°C von anhaftendem Chlorid befreit. Die salpetersaure Lösung wurde mit der oben aufgeführten Menge Wasserstoffperoxid versetzt und zur Laugung zurückgeführt.

Die Massenbilanz der Aufbereitung ergab folgendes Ergebnis:

| **Verbindung** | **Anteil im Altsalz** | **Produktmenge** | **Produkteinheit** |
|---|---|---|---|
| KNO₃ | 15,5 % | 16,1 kg | 98,1 % |
| KNO₂ | 0,2 % | 0,0 kg | - |
| NaNO₃ | 45,6 % | 104,8 kg | 99,5 % |
| NaCl | 2,8 % | 2,5 kg | 97,9 % |
| BaCO₃ | 0,5 % | 0,5 kg | 98,1 % |
| Na₂CO₃ | 27,5 % | 0,0 kg | - |
| NaOH | 7,1 % | 0,0 kg | - |
| Fe₃O₄(Rückstand) | 0,8 % | 1,1 kg | 34 % Restfeuchte |

5. Es wurden 100 kg des nitrathaltigen Altsalzgemisches aus Beispiel 1 abweichend von den gefundenen Parametern behandelt. Das Salz wurde auf eine Korngröße von weniger als 0,5 mm zerkleinert und in Teilmengen von 10 kg bei 65°C in einer Vorlage gelaugt, die 2,7 kg 65%iger Salpetersäure sowie 4 kg 50%iger Wasserstoffperoxidlösung enthielt. Dabei wurde etwas nitroses Gas (Noₓ)freigesetzt. Mit Hilfe von polymeren Flockungsmitteln wurden die unlöslichen Verunreinigungen aus der Lösung entfernt. Durch Zugabe von 1 kg Kaliumcarbonat und Kaliumhydroxid bis zum Erreichen eines pH-Werts von etwa 9 wurde das Barium als Carbonat gefällt. Die mit Salpertersäure auf pH 7 neutralisierte Lösung wurde danach auf 30°C abgekühlt und das auskristallisierte Kaliumnitrat abgetrennt. Nach dem Verdampfen von 4,1 l Wasser wurde das Natriumchlorid bei einer Temperatur von 50°C auskristallisiert. Zu der konzentrierten Lösung wurde die oben genannte Menge Salpetersäure gegeben und das dadurch auskristallisierte Natriumnitrat bei 0°C abgetrennt. Die salpetersaure Lösung wurde mit der oben aufgeführten Menge Wasserstoffperoxid versetzt und zur Laugung zurückgeführt.

Die Massenbilanz der Aufbereitung ergab folgendes Ergebnis:

| **Verbindung** | **Anteil im Altsalz** | **Produktmenge** | **Produktreinheit** |
|---|---|---|---|
| KNO₃ | 24,5 % | 50,1 kg | 98,2 % |
| KNO₂ | 30,2 % | 0,0 kg | - |
| NaNO₃ | 20,6 % | 30,5 kg | 85,1 % |
| NaCl | 5,1 % | 6,5 kg | 73,2 % |
| BaCO₃ | 2,1 % | 2,6 kg | 96,7 % |
| Na₂CO₃ | 10,5 % | 0,0 kg | - |
| NaOH | 2,0 % | 0,0 kg | - |
| Fe₃O₄(Rückstand) | 4,8 % | 7,1 kg | 32 % Restfeuchte |

Dieses Beispiel zeigt, daß bei Abweichung von den erfindungsgemäßen Parametern die zurückgewonnenen Salze unreiner werden und beim Auflösen der Altsalze Stickoxide auftreten.

## Patentansprüche

1. Verfahren zur selektiven Wiedergewinnung der Salzbestandteile aus nitrat-nitrit-hydroxidhaltigen Altsalzen, die bei der Wärmebehandlung von Stahlteilen in Salzbädern anfallen, durch Auflösen der Altsalze in Wasser, Abtrennung des unlöslichen Rückstandes und fraktionierte Auskristallisation der Alkalinitrate,
**dadurch gekennzeichnet,**
daß die festen Altsalze auf eine Korngröße von 1 bis 50 mm zerkleinert, in einer salpetersauren, wasserstoffperoxidhaltigen Lösung bei 40 bis 90°C aufgelöst werden, nach Abfiltrieren des unlöslichen Rückstandes durch Abkühlen der konzentrierten, neutralisierten Salzlösung auf -10 bis + 20°C Kaliumnitrat ausgefällt, durch weiteres Aufkonzentrieren der Lösung bei 60 bis 120°C Natriumchlorid auskristallisiert und aus der Restlösung durch Zugabe von konzentrierter Salpetersäure Natriumnitrat auskristallisiert wird.

2. Verfahren nach Anspruch 1,
**dadurch gekennzeichnet,**
daß nach dem Auflösen der Altsalze durch Zugabe von Karbonat und Alkali in leicht alkalischem Medium eventuell vorhandenes Barium als Bariumkarbonat ausgefällt und abgetrennt wird.

3. Verfahren nach Anspruch 1 und 2,
**dadurch gekennzeichnet,**
daß die festen Altsalze auf eine Korngröße von 5 bis 10 mm zerkleinert werden.

## Claims

1. A process for the selective recovery of the salt constituents from nitrate/nitrite/hydroxide-containing spent salts which are produced during the thermal treatment of steel parts in salt baths, by dissolving the spent salts in water, separating the insoluble residue and fractionated crystallisation of the alkali metal nitrates,
characterised in that
the solid spent salts are crushed to a particle size of 1 to 50 mm, dissolved in a nitric acid hydrogen peroxide-containing solution at 40 to 90°C, precipitating potassium nitrate, after filtering off the insoluble residue, by cooling the concentrated, neutralised salt solution to -10 to +20°C, crystallising out sodium chloride by further concentration of the solution at 60 to 120°C and crystallising sodium nitrate from the remaining solution by adding concentrated nitric acid.

2. A process according to Claim 1,
characterised in that,
after dissolving the spent salts, optionally present barium is precipitated as barium carbonate in a slightly alkaline medium, by adding carbonate and alkali, and separated.

3. Process according to Claim 1 and 2,
characterised in that
the solid spent salts are crushed to a particle size of 5 to 10 mm.

## Revendications

1. Procédé de récupération sélective des constituants salins à base de sels usagés contenant des nitrates-nitrites-hydroxydes qui sont formés au cours du traitement par la chaleur de pièces d'acier dans des bains de sels, par mise en solution des sels usagés dans l'eau, séparation du résidu insoluble et efflorescence fractionnée des nitrates de métal alcalin,
caractérisé en ce que
• les sels usagés solides sont broyés à une taille de grains de 1 à 50 mm, sont mis en solution dans une solution d'acide nitrique contenant du peroxyde d'hydrogène à 40 à 90°C,
• on précipite le nitrate de potassium après séparation par filtration du résidu insoluble par refroidissement de la solution de sels concentrée, neutralisée à une température allant de -10°C à +20°C,
• on fait effleurir le chlorure de sodium par une concentration supplémentaire de la solution à 60 à 120°C et en ce qu'on fait effleurir de la solution résiduelle, le nitrate de sodium par addition d'acide nitrique concentré.

2. Procédé selon la revendication 1,
caractérisé en ce que
après la mise en solution des sels usagés on précipite par addition de carbonate et d'alcali en milieu légèrement alcalin, le baryum éventuellement présent en tant que carbonate de baryum et on le sépare.

3. Procédé selon la revendication 1 et 2,
caractérisé en ce que
les sels usagés solides sont broyés à une taille de grains de 5 à 10 mm.
